**Europäisches Patentamt**

**European Patent Office**

**Office européen des brevets**

(19)

(11) Veröffentlichungsnummer: **0 193 181 B1**

# EUROPÄISCHE PATENTSCHRIFT

(12)

(45) Veröffentlichungstag der Patentschrift: **08.05.91**

(51) Int. Cl.⁵: **B23P 15/00**, F04D 19/04

(21) Anmeldenummer: **86102481.8**

(22) Anmeldetag: **26.02.86**

(54) **Scheiben mit Schaufeln hoher Stabilität für Turbomolekularpumpen.**

(30) Priorität: **01.03.85 DE 3507274**

(43) Veröffentlichungstag der Anmeldung:
**03.09.86 Patentblatt 86/36**

(45) Bekanntmachung des Hinweises auf die
Patenterteilung:
**08.05.91 Patentblatt 91/19**

(84) Benannte Vertragsstaaten:
**AT BE CH DE FR GB IT LI SE**

(56) Entgegenhaltungen:
**DE-A- 2 923 632        DE-B- 1 071 275
DE-C- 726 845          DE-C- 909 650
FR-A- 523 989          GB-A- 829 035
GB-A- 911 093          US-A- 1 495 222
US-A- 3 263 569**

(73) Patentinhaber: **Arthur Pfeiffer Vakuumtechnik
Wetzlar GmbH
Emmeliusstrasse 33
W-6334 Asslar(DE)**

(72) Erfinder: **Lotz, Heinrich
Helgebachstrasse 47
W-6330 Wetzlar(DE)**

Rank Xerox (UK) Business Services

## Beschreibung

Eine Turbomolekularpumpe ist aus Rotor- und Statorscheiben aufgebaut, die abwechselnd hintereinander angeordnet sind und Schaufelkränze aufweisen. Die Pumpwirkung beruht darauf, daß durch die Schaufeln der Rotorscheiben Impulse in Pumprichtung auf die Moleküle des zu pumpenden Gases übertragen werden. Die beiden wesentlichen Pumpeigenschaften, nämlich Saugvermögen und Druckverhältnis, hängen stark von der Drehzahl der Rotorscheiben ab. Das Saugvermögen steigt linear mit der Drehzahl an und das Druckverhältnis sogar exponentiell. Um eine optimale Pumpwirkung zu erreichen, muß daher der Rotor mit möglichst hoher Geschwindigkeit rotieren. Dadurch werden hohe Anforderungen an die Schaufeln der Rotorscheiben betreffend ihrer Geometrie, mechanischen Festigkeit und Stabilität, gestellt.

Schaufeln für Scheiben von Turbomolekularpumpen und/oder Verfahren zur Herstellung solcher Schaufeln bzw. Scheiben werden unter anderem in den folgenden Veröffentlichungen beschrieben:

| | |
|---|---|
| DE-PS | 10 15 573 |
| DE-PS | 15 03 704 |
| DE-PS | 20 35 063 |
| DE-PS | 20 50 555 |
| DE-AS | 22 29 724 |
| DE-AS | 26 54 055 |
| DE-AS | 27 17 366 |
| DE-OS | 29 23 632 |
| FR-PS | 12 97 182 |
| FR-PS | 13 06 013 |

Becker, Nesseldreher:
Neue Hochleistungsscheiben für Turbo-Molekularpumpen - Vakuum-Technik 23 (1973), 1 S.12-15

Die in diesen Veröffentlichungen vorgestellten Schaufeln haben rechteckigen, rautenähnlichen oder dreieckförmigen Querschnitt, bzw. durch die vorgestellten Herstellungsverfahren werden Schaufeln von solchem Querschnitt erzeugt.

Voraussetzung für optimale Pumpeigenschaften ist eine minimale Dicke der Schaufeln. Dies ist dadurch bedingt, daß wegen der angestrebten hohen Drehzahl aus Festigkeitsgründen die Fliehkraft, die auf die Schaufeln, den Schaufelgrund und auf den Innendurchmesser der Rotorscheiben wirkt, auf ein Minimum begrenzt werden muß. Weiterhin wird eine geringe Schaufeldicke von Rotor- und Statorscheiben angestrebt, um den Schöpfraum, der sich zwischen den Schaufeln befindet, möglichst groß zu machen, was eine der Voraussetzungen für ein hohes Saugvermögen ist.

Eine geringe Schaufeldicke wirkt sich aber nachteilig auf die Stabilität der Schaufeln aus. Es kann z.B. durch Resonanzen, welche bei bestimmten Drehzahlen während des Hochlaufs oder des Auslaufens des Rotors auftreten, zu Schwingungen kommen, die eine Berührung der Schaufeln mit den Statorscheiben zur Folge haben können, was in der Regel zur Zerstörung der Pumpe führt.

Verbiegungen und Schwingungen der Schaufeln treten auch bei Flutvorgängen auf, welche große Kräfte in axialer Richtung erzeugen.

Die Aufgabe der Erfindung ist es, Schaufeln für Scheiben von Turbomolekularpumpen und ein Verfahren für deren Herstellung anzugeben, die bei minimaler Schaufeldicke und somit optimalen Pumpeigenschaften eine im Vergleich zu den seither bekannten Schaufeln hohe Stabilität aufweisen. Außerdem soll das Herstellungsverfahren ermöglichen, Scheiben für Turbomolekularpumpen, die mit solchen Schaufeln ausgerüstet sind, rationell zu fertigen. Letzteres bedeutet, daß eine möglichst große Anzahl von Scheiben in einem Arbeitsgang gleichzeitig bearbeitet werden kann.

Die Aufgabe wird gelöst, indem gemäß Patentanspruch 1 die Scheiben mit einer Topfsäge bearbeitet werden. Dadurch entstehen Schaufeln mit gekrümmtem Querschnitt, d.h. Schaufeln, deren Querschnitt ein Ringsegment darstellt. Da sich beim Einsägen in die Scheiben parallele Kanäle ergeben, ist die Wandstärke der Schaufeln nicht gleich. Sie nimmt von außen nach innen ab. Dadurch werden die Festigkeitseigenschaften einer Scheibe sehr nachteilig beeinflußt, da sich eine hohe mechanische Belastung am Schaufelgrund ergibt. Um dies zu vermeiden, werden nach den Ansprüchen 2 und 3 Schaufeln mit gleicher Wandstärke hergestellt, indem man entweder die Topfsäge oder die Vorrichtung zur Aufnahme der Scheiben eine Zusatzbewegung vollführen läßt oder eine Topfsäge verwendet, die aus zwei koaxialen Zylindern besteht.

Die Festigkeitseigenschaften einer Scheibe können noch günstiger gestaltet werden, indem man Schaufeln herstellt, deren Wandstärke von innen nach außen abnimmt. Um dies zu erreichen, läßt man die Achse der Topfsäge eine Kreisbewegung beschreiben. Somit entsteht eine oszillierende Bewegung. Wenn man den Radius dieser Kreisbewegung ändert, kann man Schaufeln mit veränderlicher Wandstärke herstellen. Insbesondere ergeben sich Schaufeln, deren Wandstärke von innen nach außen abnimmt, wenn der Radius der Kreisbewegung beim Einsägen vom äußeren Schaufelrand bis zum Schaufelgrund abnimmt.

Es ergeben sich somit eine Rotationsbewegung und eine überlagerte Exzenterbewegung. Da es nur auf die relative Bewegung von Werkzeug, in diesem Falle der Topfsäge, und dem Werkstück, in diesem Falle der Vorrichtung, auf der die Scheiben montiert sind, ankommt, ist es grundsätzlich egal, welches Teil, Werkzeug oder Werkstück, eine oder beide Bewegungen vollführt. Auch die Translationsbewegung in Richtung der Achse kann sowohl vom Werkzeug als auch vom Werkstück ausgeführt werden.

Das gleiche Ergebnis, nämlich Schaufeln, deren Querschnitt von innen nach außen abnimmt, erhält man, wenn die Achse der Topfsäge oder die Achse der Vorrichtung, auf der die Scheiben montiert sind, anstelle eine Kreisbewegung zu vollführen, auf einem Kegelmantel mit veränderlicher Steigung umlaufen.

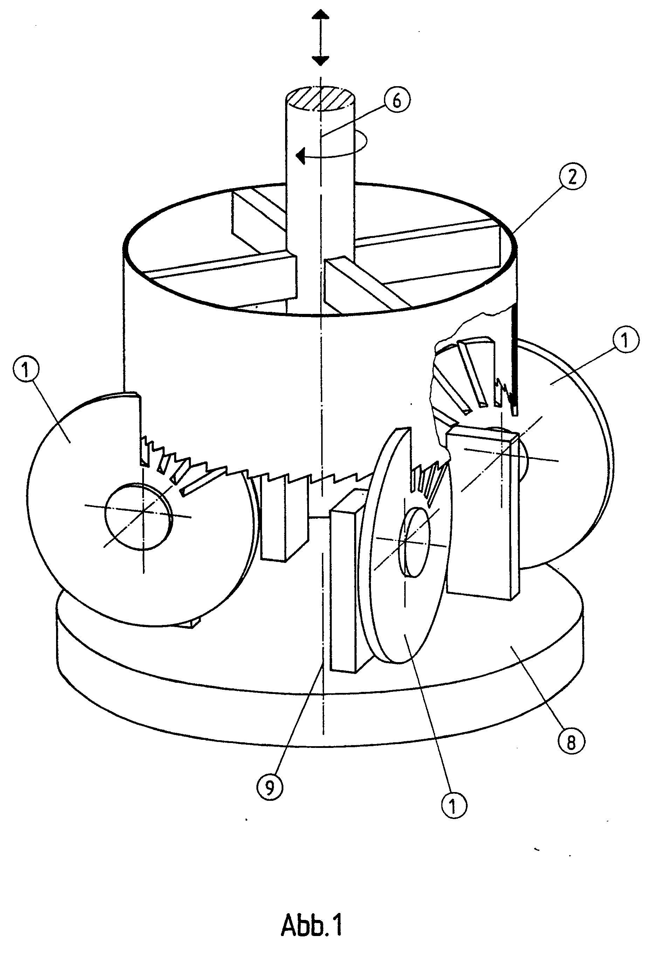

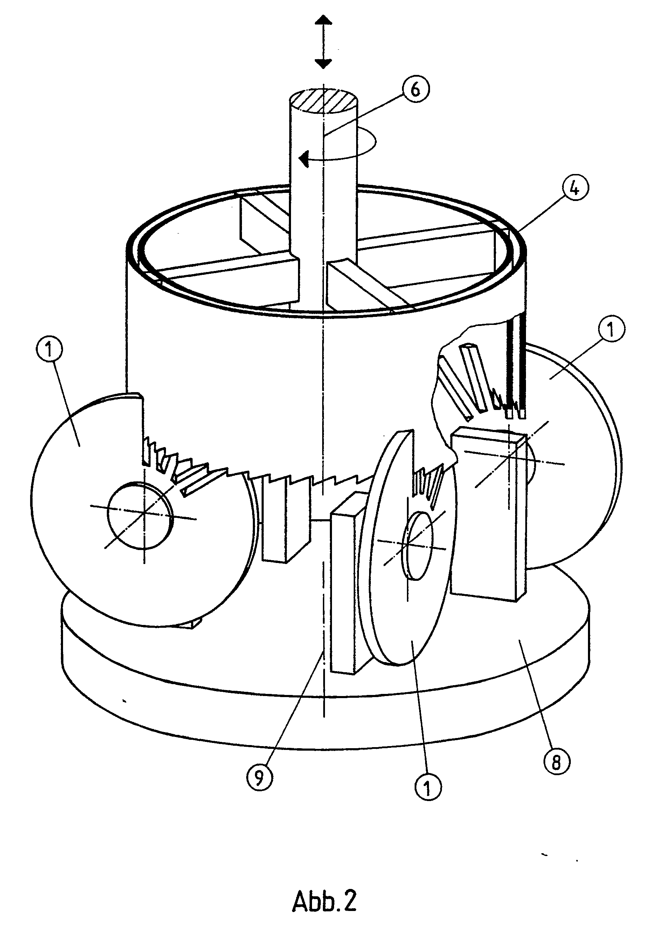

Nach Abb. 1 und 2 können mehrere Scheiben gleichzeitig bearbeitet werden.

Als Vorteil der Erfindung ergeben sich Scheiben deren Schaufeln einen gekrümmten Querschnitt aufweisen. Dadurch wird die Stabilität der Schaufeln erheblich verbessert, ohne auf die optimalen Pumpeigenschaften, wie sie z.B. durch eine minimale Schaufeldicke gegeben sind, verzichten zu müssen. Die Wandstärke der Schaufeln nimmt von innen nach außen hin ab, wodurch die Festigkeitseigenschaften erheblich verbessert werden. Eine rationellere Fertigung ist dadurch gegeben, daß mehrere Scheiben gleichzeitig bearbeitet werden können.

Anhand der folgenden Abbildungen soll die Erfindung näher erläutert werden.

| Abb. 1 | Topfsäge und Vorrichtung zur Scheibenaufnahme |
| Abb. 2 | Topfsäge, bestehend aus 2 koaxialen Zylindern und Vorrichtung zur Scheibenaufnahme |
| Abb. 3 | Vorrichtung zur Erzeugung einer Exzenterbewegung |
| Abb.4 | Schaufeln mit gekrümmtem Querschnitt und mit von innen und außen hin zunehmender Wandstärke |
| Abb. 5 | Schaufeln mit gekrümmten Querschnitt und gleicher Wandstärke |
| Abb. 6 | Schaufeln mit gekrümmten Querschnitt mit von innen nach außen hin abnehmender Wandstärke |

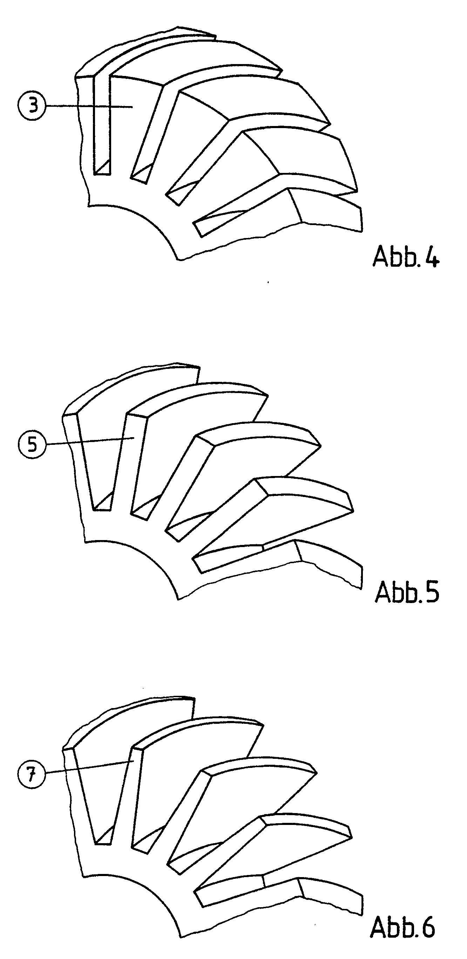

Abb. 1 zeigt eine Vorrichtung 8 auf der die Scheiben 1 montiert sind. Mit einer Topfsäge 2 werden parallele Schlitze in die Scheiben eingesägt. Die Anzahl der Scheiben, die gleichzeitig bearbeitet werden können, variiert je nach Scheibengröße im Verhältnis zum Durchmesser der Topfsäge und nach der Anordnung der Scheiben. Die Anordnung ist durch den Winkel der einzusägenden Schlitze gegenüber der Scheibenebene gegeben. Bei diesem Verfahren entstehen Scheiben mit Schaufeln 3, wie sie in der Abb. 4 dargestellt sind. Das Profil der Schaufeln ist gekrümmt. Da mit diesem Herstellungsverfahren parallele Schlitze eingesägt werden, entstehen Schaufeln, deren Querschnitt von innen nach außen zunimmt.

Die Anordnung in Abb. 2 weicht insofern von derjenigen in Abb. 1 ab, als bei jener die Topfsäge 4 aus zwei koaxialen Zylindern besteht. Bei diesem Verfahren ergeben sich Scheiben mit Schaufeln 5, wie sie in Abb. 5 dargestellt sind. Das Profil der Schaufeln ist gekrümmt. Die Wandstärke der Schaufeln und somit ihr Querschnitt ist über die gesamte Schaufellänge gleich.

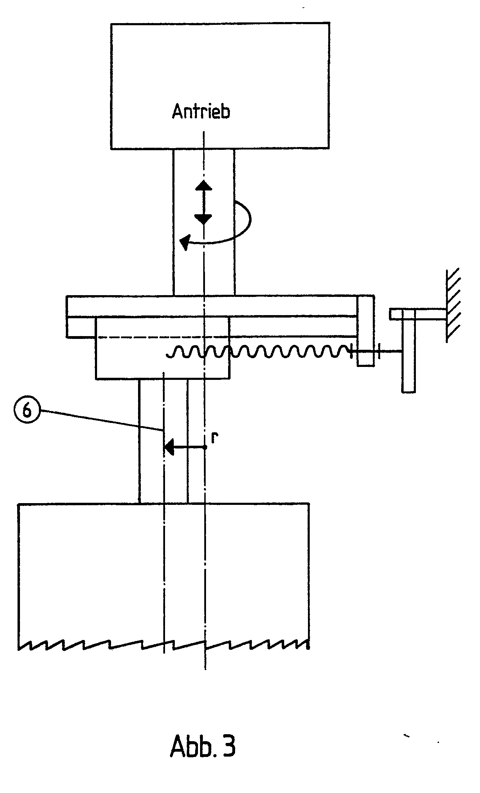

Wenn man, wie in Abb. 3 dargestellt, die Achse 6 der Topfsäge aus Abb.1 oder Abb.2 einen Kreisbogen mit dem variablen Radius r beschreiben läßt, wobei während des Einsägens der Radius r abnimmt, dann erhält man Schaufeln 7 (Abb. 6), deren Wandstärke von außen nach innen hin zunimmt. Das Profil dieser Schaufeln ist ebenfalls gekrümmt. Auch die in Abb. 5 dargestellten Scheiben mit gleicher Wandstärke können mit der Anordnung in Abb. 1 hergestellt werden, wenn man die Achse der Topfsäge einen Kreisbogen beschreiben läßt, dessen Radius während des Einsägens abnimmt.

In diesen Fällen ergibt sich neben der Rotationsbewegung auch eine oszillierende Bewegung der Topfsäge. Die gleiche Wirkung erhält man, wenn man eine oder beide Bewegungen, anstatt von der Topfsäge 2,4 von der Vorrichtung 8, auf der die Scheiben montiert sind, durchführen läßt. Dann würde anstelle der Achse 6 der Topfsäge 2,4 die Achse 9 der Vorrichtung 8 rotieren und anstatt daß die Achse 6 der Topfsäge 2,4 einen Kreisbogen mit variablem Radius r beschreibt, wird diese Bewegung von der Achse 9 der Vorrichtung 8 übernommen.

## Ansprüche

1. Verfahren zur Herstellung von Scheiben für Turbomolekularpumpen, dadurch gekennzeichnet, daß in die Scheiben (1) mit einer Topfsäge (2) Schlitze eingesägt werden und daß dadurch Schaufeln (3) mit gekrümmtem Querschnitt entstehen, wobei der Radius der Krümmung dem Radius entspricht, den die Topfsäge beschreibt.

2. Verfahren nach Anspruch 1, dadurch gekennzeichnet, daß eine Topfsäge (4) verwendet wird, die aus zwei koaxialen Zylindern besteht und daß dadurch Schaufeln (5) mit gekrümmtem Querschnitt und gleicher Wandstärke vom Schaufelgrund bis zum äußeren Radius entstehen.

3. Verfahren nach Anspruch 1, dadurch gekennzeichnet, daß die Achse (6) der Topfsäge (2) eine Kreisbewegung mit veränderlichem Radius vollführt und sich somit eine oszillierende Bewegung der Topfsäge ergibt, wobei sich der Radius derart verändert, daß er während des Einsägens vom äußeren bis zum inneren Rand des Schaufelkranzes so abnimmt, daß Schaufeln (5) mit gleicher Wandstärke vom Schaufelgrund bis zum äußeren Radius entstehen.

4. Verfahren nach Anspruch 1, dadurch gekennzeichnet, daß die Achse (9) der Vorrichtung (8), auf der die Scheiben montiert sind, eine Kreisbewegung mit veränderlichem Radius vollführt und sich somit eine oszillierende Bewegung der Scheiben ergibt, wobei sich der Radius derart verändert, daß er während des Einsägens der Topfsäge vom äußeren bis zum inneren Rand des Schaufelkranzes so abnimmt, daß Schaufeln mit gleicher Wandstärke vom Schaufelgrund bis zum äußeren Radius entstehen.

5. Verfahren nach einem der Ansprüche 1 und 2, dadurch gekennzeichnet, daß die Achse (6) der Topfsäge (2,4) eine Kreisbewegung mit veränderlichem Radius vollführt und sich somit eine oszillierende Bewegung der Topfsäge ergibt, wodurch Schaufeln (7) mit veränderlicher Wandstärke entstehen.

6. Verfahren nach einem der Ansprüche 1 und 2, dadurch gekennzeichnet, daß die Achse (9) der Vorrichtung (8), auf der die Scheiben (1) montiert sind, eine Kreisbewegung mit veränderlichem Radius vollführt und sich somit eine oszillierende Bewegung der Vorrichtung ergibt, wodurch Schaufeln mit veränderlicher Wandstärke entstehen.

7. Verfahren nach einem der Ansprüche 5 und 6, dadurch gekennzeichnet, daß der Radius der Kreisbewegungen derart verändert wird, daß er vom äußeren bis zum inneren Rand des Schaufelkranzes abnimmt, so daß Schaufeln (7) mit von außen nach innen hin zunehmendem Querschnitt entstehen.

8. Verfahren nach einem der Ansprüche 1 bis 7, dadurch gekennzeichnet, daß mehrere Scheiben gleichzeitig bearbeitet werden.

9. Verfahren nach einem der Ansprüche 1 bis 8, dadurch gekennzeichnet, daß anstelle der Topfsäge die Vorrichtung, auf der die Scheiben montiert sind, rotiert.

## Claims

1. A method of producing discs for turbo-molecular pumps, characterised in that slots are sawn in the discs (1) by a cup-saw (2) and that blades (3) with a curved cross-section are produced thereby, the radius of curvature corresponding to the radius which the cup-saw describes.

2. A method according to claim 1, characterised in that there is employed a cup-saw (4) which comprises two co-axial cylinders and that there are produced thereby blades (5) with a curved cross-section and the same wall thickness from the root of the blade to the outer radius.

3. A method according to claim 1, characterised in that the axis (6) of the cup-saw (2) executes a circular motion with a variable radius which results in an oscillating motion of the cup-saw, the radius varying in such a manner that it decreases during the sawing from the outer to the inner edge of the ring of blades so that blades (5) are formed having the same wall thickness from the root of the blade to the outer radius.

4. A method according to claim 1, characterised in that the axis (9) of the apparatus (8), on which the discs are mounted, executes a circular motion with variable radius which results in an oscillating motion of the discs, the radius varying in such a manner that it decreases during the sawing of the cup-saw from the outer to the inner edge of the ring of blades so that blades are formed having the same wall thickness from the root of the blade to the outer radius.

5. A method according to claim 1 or 2, characterised in that the axis (6) of the cup-saw (2,4) executes a circular motion with a variable radius which results in an oscillating motion of the cup-saw, whereby blades (7) are formed with varying wall thickness.

6. A method according to claim 1 or 2, characterised in that the axis (9) of the apparatus (8), on which the discs (1) are mounted, executes a circular motion with varying radius which results in an oscillating motion of the apparatus, whereby blades are formed with varying wall thickness.

7. A method according to claim 5 or 6, characterised in that the radius of the circular motions is varied in such a manner that it decreases from the outer to the inner edge of the ring of blades, so that there are formed blades (7) with a cross-section which increases from the exterior towards the interior.

8. A method according to any one of claims 1 to 7, characterised in that a plurality of discs are machined simultaneously.

9. A method according to any one of claims 1 to 8, characterised in that instead of the cup-saw there rotates the apparatus on which the discs are mounted.

**Revendications**

1. Procédé de fabrication de disques pour pompes turbomoléculaires, caractérisé en ce que l'on aménage, dans les disques (1), des fentes au moyen d'une scie en pot (2), et en ce que, ce faisant, on produit des aubes (3) qui ont une section transversale courbée dont le rayon de courbure correspond au rayon décrit par la scie (2).

2. Procédé selon la revendication 1, caractérisé en ce que l'on utilise une scie en pot (4) comportant deux cylindres coaxiaux, et en ce que, ce faisant, on produit des aubes (5) ayant une section transversale courbée et une épaisseur qui est constante depuis leur base jusqu'au rayon extérieur.

3. Procédé selon la revendication 1, caractérisé en ce que l'axe (6) de la scie en pot (2) accomplit un mouvement circulaire à rayon variable, d'où il résulte un mouvement local oscillant de la scie avec un rayon variant en diminuant au cours du sciage, du bord extérieur vers le bord intérieur de la couronne d'aubes, de manière à obtenir des aubes (5) ayant une épaisseur qui est constante depuis leur base jusqu'au rayon extérieur.

4. Procédé selon la revendication 1, caractérisé en ce que l'axe (9) du dispositif (8), sur lequel les disques sont montés, accomplit un mouvement circulaire de rayon variable, d'où il résulte un mouvement oscillant des disques, le rayon variant en diminuant, au cours du sciage de la scie en pot, du bord extérieur vers le bord intérieur de la couronne d'aubes, de manière à obtenir des aubes ayant une épaisseur qui est constante depuis leur base jusqu'au rayon extérieur.

5. Procédé selon l'une quelconque des revendications 1 ou 2, caractérisé en ce que l'axe (6) de la scie en pot (2,4) accomplit un mouvement circulaire à rayon variable, de manière que le mouvement oscillant de la scie résultant conduise à la formation d'aubes ayant une épaisseur variable.

6. Procédé selon l'une quelconque des revendications 1 ou 2, caractérisé en ce que l'axe (9) du dispositif (8) sur lequel les disques (1) sont montés, accomplit un mouvement circulaire à rayon variable, de manière que le mouvement oscillant du dispositif résultant conduise à la formation d'aubes ayant une épaisseur variable.

7. Procédé selon l'une quelconque des revendications 5 ou 6, caractérisé en ce que l'on fait varier le rayon des mouvements circulaires en le diminuant du bord extérieur vers le bord intérieur de la couronne d'aubes, de manière à obtenir des aubes (7) ayant une section droite croissant de l'extérieur vers l'intérieur.

8. Procédé selon l'une quelconque des revendications 1 à 7, caractérisé en ce que l'on usine simultanément plusieurs disques.

9. Procédé selon l'une quelconque des revendications 1 à 8, caractérisé en ce qu'au lieu de la scie en pot, c'est le dispositif (8) sur lequel les disques (1) sont montés qui tourne.

Abb. 1

Abb.2

Antrieb

6

r

Abb. 3

Abb. 4

Abb. 5

Abb. 6